# EUROPEAN PATENT SPECIFICATION

(11) **EP 2 796 207 B1**
(45) Date of publication and mention of the grant of the patent: **16.01.2019**
(21) Application number: 14163577.1
(22) Date of filing: 04.04.2014
(51) Int. Cl.: B05B 13/04, B05B 14/10, B05B 14/30

(54) **Applicator machine**
Applikatormaschine
Machine d'applicateur

(30) Priority: 05.04.2013 GB 201306132
(43) Date of publication of application: 29.10.2014
(73) Proprietor: Pipeline Induction Heat Ltd., Rossendale Road Industrial Estate Burnley Lancashire BB11 5SW (GB)
(72) Inventor: Daykin, Damian, Clitheroe, Lancashire BB7 1BQ (GB)
(74) Representative: SBD IPAdmin

(56) References cited:
- WO-A1-2009/024755
- US-B1- 6 881 266

## Description

The present invention relates to a machine for applying a coating to a pipeline field joint and has particular, although not exclusive, relevance to such pipelines which are used in a sub-sea environment.

Oil, gas and other pipelines are frequently formed from multiple lengths of individual steel pipes which are externally coated and then welded together in order to form a pipeline. The ends of the pipes at which the welded jointing operation occurs are known as field joints. The individual lengths of pipe, prior to being welded into a pipeline, are coated at a factory usually remote from where the pipeline is laid. This is particularly so when the pipeline is laid at sea, of course. The pipes are coated at the factory in order to prevent corrosion and/or other damage occurring to the pipe both from the environment and during transportation. However, a short section of uncoated pipe (usually around 15 cm) is left at each end. This uncoated end section is necessary in order to enable the lengths of pipe to be welded together end to end in order to form the pipeline at the site where the pipeline is to be laid. After welding the exposed region of steel pipe either side of the weld (the field joint) must be coated before the pipeline is laid.

Pipelines may be constructed in situ, where the pipes are welded together and coated in or very close to the position in which the pipeline will be buried, this is typical for onshore cross-country pipelines, and with this construction method all the necessary equipment must be transported to each field joint position in order to coat that field joint and lifted on and off the pipeline in order to perform the work. Alternatively the pipeline may be constructed in a dedicated facility where the pipe is pulled through the facility in increments equal to the length of one pipe section, this is typical for offshore pipelines and in this construction method each operation is performed in a fixed location with the pipeline field joints moving into the position where the welding and coating operations will be performed. With this construction method it is not always necessary to lift the equipment onto or off the pipeline - the pipeline may be pulled through the equipment. In the description which follows reference is made to the latter construction, where the pipeline moves into the working location, however an alternative hinged construction is also referenced.

It is known to those skilled in the art the problems associated with uncoated field joints being laid, particularly in a sub-sea environment. Not just corrosion may occur, but the field joint may be vulnerable to physical damage from the likes of trawler activity.

A variety of coating techniques are employed for the welded field joint depending upon the environment in which the pipeline is to be laid. A variety of apparatus is available to carry out coating of pipeline field joints, largely aimed at reducing the time required to coat the field joints but also to help ensure a consistent application of a coating. Laying a pipeline typically involves coating several thousand field joints thus, even a small time saving in the time required to coat each field joint can lead to significant overall cost savings.

Some pipeline coating techniques require that the field joint be pre-heated to a temperature elevated above that of its environment in order that an applied coating may correctly adhere to the field joint and then subsequently cure. Such coating techniques would include powder coatings such as Scotchkote™ Fusion Bonded Epoxy Powder, manufactured by 3M™.

Powders used in field joint coating techniques are frequently entrained in a stream of compressed air and dry-sprayed onto the welded joint after it has been heated. On contact with the heated pipe surface the powder material coalesces and cures to form a continuous coating layer. Transfer of powder to the heated surface is not 100% efficient and a proportion of the powder material escapes as "overspray". This overspray can contaminate the working environment and can present a potential safety hazard for the machine operator and others working in the vicinity.

Therefore, a means for at least alleviating the potential for powder coating material to be in the atmosphere around the operator is something which is desirable.

An aim of the present invention, therefore, is to at least alleviate environmental pollution caused by overspray material being used during the field joint coating process. According to the present invention, therefore, a pipeline field joint coating applicator machine comprises a first frame arranged to be mounted on a pipeline and which first frame carries an induction heating coil encircling the pipeline for heating field joints of the pipeline on which the first frame is mounted; a second frame is arranged to be mounted on the pipeline and is rotatable thereabout, which second frame carries a pipeline field joint coating applicator and which second frame is arranged axially adjacent the first frame.

Pipeline field joint coating applicators of this known type are disclosed, for example in WO 2009/024755. In this prior art document there is shown a two-frame system for mounting on a pipeline whose field joints are to be coated. An induction coil is mounted on the first frame and is moveable axially along the pipe in order that a selected position of the pipe (a field joint) may be heated to a temperature at which an application coating may adhere to the surface of the pipeline. After heating, the frame is moved axially so that the heated portion of the pipe is then surrounded by the second frame member which carries a rotatable coating applicator. Rotation of the coating applicator, via a stator mounted to the first frame by rollers, ensures a coating of the necessary material evenly around the field joint.

Problems exist with this type of coating applicator however with regard to coating material becoming airborne in the atmosphere around the applicator machine and, therefore, the operative. Particularly the material of the coating, whilst being injected into the region between the outer surface of the pipeline field joint and the applicator machine, may become airborne. Lateral dust extraction is attempted to be achieved, but this needs to be tempered such that any entrained air flow does not prevent coating material from reaching the field joint.

The present invention, as set out above, is characterised by a dust extraction hood mounted on the second frame and arranged to surround the coating applicator, which dust extraction hood has two lateral sides, in which lateral sides respective holes are formed through which holes the pipeline may pass; the dust extraction hood being coupled to a vacuum source and a filter such that air may be drawn into the hood via one or both of the holes in the lateral sides of the hood under action of the vacuum source and air so drawn into the hood which is then contaminated with coating material from the applicator is filtered from the coating material via the filter. Employing a dust extraction hood in this manner permits not only of the avoidance of coating power being released into the atmosphere, but also enables more efficient control of errant powder not bonded to the field joint than has been the case hitherto.

The present invention will now be explained, by way of example only, with reference to the accompanying drawings of which:
Figure 1 shows a schematic representation of a prior art coating machine following the same principles as that disclosed in WO 2009/024755;
Figure 2 shows an end on axial view of a coating applicator machine according to the present invention;
Figure 3 shows a side perspective view of the coating applicator machine of Figure 2, with the applicator compartment open;
Figure 4 shows an end view similar to that of Figure 2 but with the viewing windows open for maintenance of the hood;
Figure 5 illustrates a side perspective view of the opening of the coating applicator as shown in figure 3, but a closer view to show how servicing and/or cleaning may be accomplished, and;
Figure 6 shows a side-on view of the machine from the same side as the perspective view of Figure 3.

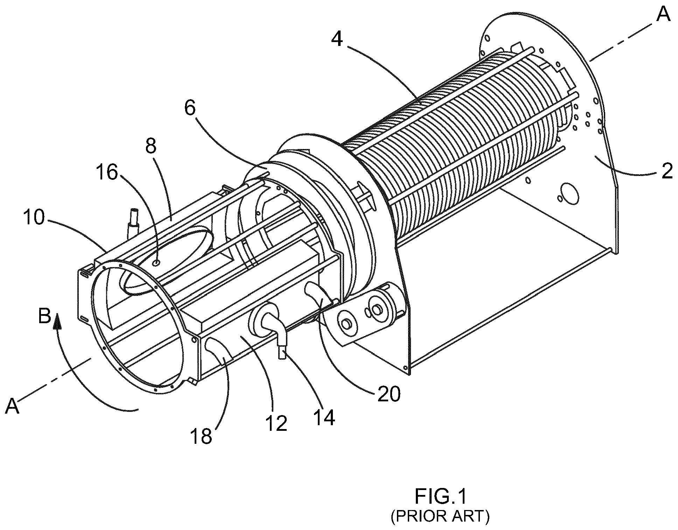

Referring now to Figure 1, which shows a schematic version of the known prior art applicator machines, it can be seen that a first frame 2 has mounted thereon an induction heating coil 4. The first frame 2 and induction heating coil 4 define an axis A-A along which a pipeline will pass. Axially adjacent and coupled to the first frame 2 is second frame 6 on which second frame 6 coating applicator 8 is formed. The second frame 6 is able to rotate about the axis A-A as shown by the arrow B in the figure. The applicator 8 is split into two identical and diametrically opposed half portions: first half-portion 10 and second half-portion 12.

Centrally mounted within each respective half-portion 10, 12 is applicator material injector 14 (only one of which can be seen) which, in use of the machine injects coating material through an aperture 16 (again, only one of which apertures 16 can be seen). Material for coating the field joint passing through injector 14 is then directed via the aperture 16 towards the outer surface of the pipeline, surrounding which pipeline is the second frame 6.

Laterally flanking (in an axial direction) the injector 14 are two vacuum extraction tubes 18, 20. The purpose of the tubes 18, 20 is to draw coating material which has not adhered to the field joint surface away from the applicator machine and through an external filter once that coating material has passed though the injector 14, then aperture 16 and failed to adhere to the field joint (as some material inevitably will).

Whilst this atmospheric cleansing operation used in the prior art may seem effective, it has its limitations. Firstly, if the vacuum applied to the extractor tubes 18, 20 is too great, then coating material flowing through the injector 14 and exiting through its respective aperture 16 may become entrained in an airflow so as to move axially from the aperture 16 to the extractor tubes 18, 20 rather than reaching its target of the external surface of the field joint. Additionally, any stray coating material which has not adhered to the field joint surface post-exit from the aperture 16 may not be caught by the suction occurring through the extractor tubes 18, 20 and may therefore contaminate the environment around the machine.

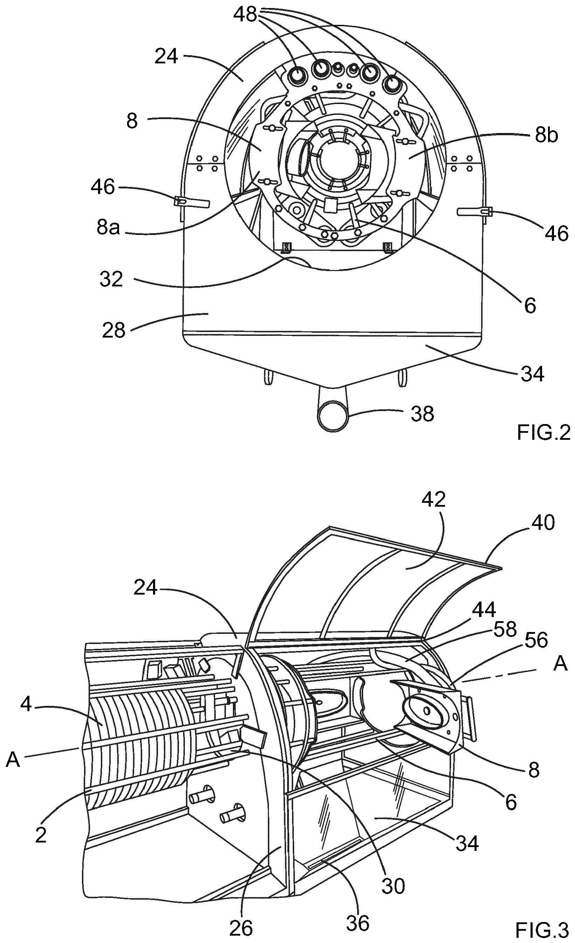

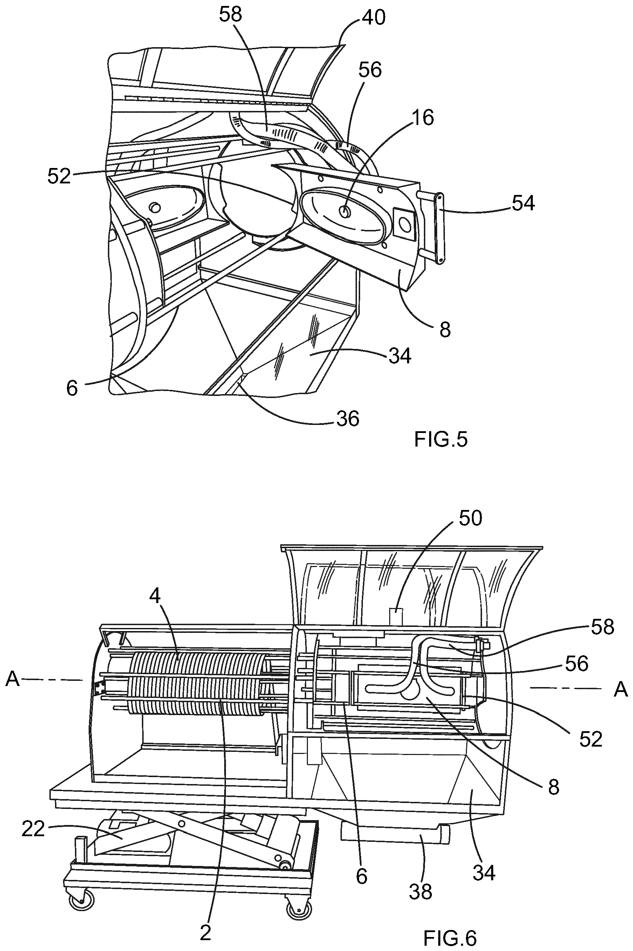

Referring now to also to Figures 2 to 6 which show an embodiment of the present invention, it can be seen that corresponding components found in the prior art shown in Figure 1 are correspondingly numbered. The pipeline for coating is pulled through the machine (as shown in Figures 3 and 6) from left to right. The machine sits on a scissor table 22 so that the overall height of the machine may be readily altered to suit the circumstances. As the pipeline is moved axially along the machine axis A-A, the field joint to be coated will eventually be within or adjacent the machine in which the coating process is to be performed. Movement of the pipeline is stopped and the machine is moved along the pipeline to align the coil with the field joint. This movement of the machine enabled accurate alignment with the field joint to be coated, which may not be possible by movement of the pipeline itself. Next the induction coil is energised, in known manner, until such time as the surface of the field joint to be coated reaches the required temperature. Those skilled in the art will appreciate that the required temperature is dictated by the chemical properties of the coating material and may vary from situation to situation, for Fusion Bonded Epoxy coating as an example, the required temperature is typically in the region 200 - 250°C.

Once this temperature has been reached, the induction coil is de-energised and the machine is moved further to the left until the field joint sits within the second frame 6 and is surrounded by the coating applicator 8. The coating applicator 8 is rotatable around the pipeline and is split into two applicator halves (as shown in Figure 2) 8a and 8b. Where removal from the pipeline is not necessary a simple design is possible as illustrated, where the frames are designed such that they can be dismantled for removal if necessary. Where frequent removal and replacement is necessary the two applicator halves 8a, 8b may be hingedly connected to each other to permit ease of application and removal of the applicator around a pipeline which has no end. The same is true for the first frame 2, although the hinge joints are not shown, and a row of electrical contacts is required to facilitate splitting the coil, such arrangements are well known and one such is illustrated in WO 2009/024755.

It can be seen that the first 2 and second 6 frames are axially adjacent and in this example are coupled together. It should be understood that the frames 2, 6 need not be coupled together. So long as the field joint, post-heating by the induction coil 4, can be moved within the confines of the second frame 6 and its coating applicator 8, then unconnected frames will work equally well.

Surrounding and mounted on the second frame 6 is dust extractor hood 24. The hood 24 completely surrounds the coating applicator 8 and has formed therein two lateral sides 26, 28 each lateral side of which has a respective hole 30, 32 formed therein.

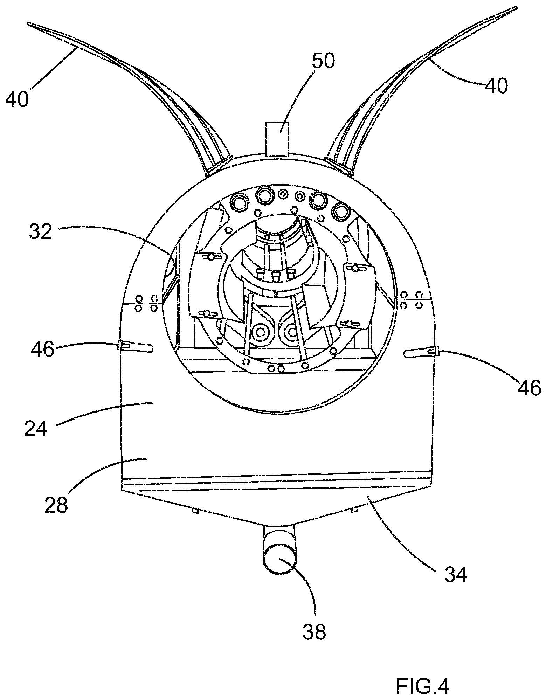

The bottom portion of the hood includes a hopper in this example base collection tray 34, which tray 34 is designed to collect coating material which has not adhered to the outer surface of the field joint. It can be seen from Figure 4 that the base collection tray 34 has formed at its lowest apex point therein an extraction slit 36, which slit 36 communicates with a vacuum source coupled thereto via vacuum tube 38. In the example shown for clarity the vacuum tube 38 terminates, but those skilled in the art will appreciate that coupling the tube 38 to a vacuum source is a straightforward undertaking and is, therefore, not described in any detail herein.

The hood 24 includes at least one removable viewing screen for allowing an operator of the machine to view the coating process. In this example the viewing screen comprises a hinged flap 40 with an integral perspex screen 42. The flap 40 is hinged to the body of the hood at several points 44 in order to allow an operator to lift up the flap 40 for maintenance work on the applicator (as readily shown in Figure 3). It will be apparent to those skilled in the art that, during use of the machine, the flap 40 is closed but, because the perspex screen 42 is transparent, the operator may watch the coating process. In order to secure the hinged flap 40 in position on the hood 24 latches 46 are provided (see Figures 2 and 4).

Although the present invention shows two lateral flaps 40 (see Figure 4) this need not be the case. Any number of removable viewing screens may be formed in the hood 24.

Although the pipeline is not shown in any of the drawings, it can be seen from the figures that the diameter of the holes 30, 32 are likely to be significantly larger than the external diameter of the field joint to be coated. It is considered a particular advantage of the present invention to be able to alter the diameter of the holes 30, 32 by way of a variable diameter mechanism such as a known mechanical iris used for altering the diameter of a camera lens or the like.

Particularly, what is important is that air flow from the outside atmosphere into the hood 24 via the holes 30, 32 be controllable by the operator. There may be circumstances in which a larger diameter hole 30, 32 is required in order to reduce the velocity of air passing through the hole and into the hood 24. Conversely there may be circumstances in which a larger velocity is needed in which case a reduced diameter hole will cause a throttling effect of the air as it passes between the hole 30, 32 and the pipe coming into the hood 24.

In any event, as the vacuum source is commenced (once attached to tube 38) air will be drawn into the hood 24 via the holes 30, 32 to the slit 36 in the base collection tray 34. Any coating material which has not passed from the applicator 8 to be bonded to the outside surface of the field joint within the hood 24 will be entrained within the air flow caused by the vacuum and removed from the hood via the slit 36 and vacuum tube 38 into an external filter (not shown).

Those skilled in the art will appreciate that the filter need not be external but could be internal of the hood It can be seen from the figures that a further vacuum attachment point 50 (see figures 4 and 6) is formed in the upper portion of the hood 24. Whilst optional, this further attachment point adds the potential either for greater air volume to flow per unit time, or for extraction to occur via the top part of the hood 24 in addition, or as an alternative, to the bottom part via the tray 34.

Referring now particularly to figures 3 and 5 that the coating applicator 8 is hingedly coupled to the second frame 6 via hinges 52 so that the applicator 8 may be opened by swinging it away from the frame 6 to permit servicing or cleaning. A manually-operable handle 54 is provided to aid this operation.

It can also be see that not only are there material supply hoses 56 for transfer of the power coating material to the applicator 8, but also adjacent high-pressure hoses 58 for supply of compressed air used for cleaning the applicator 8 and the inside of the hood 24. The compressed air supply is connected to at least two tubular elements, each tubular element mounting a number of nozzles or a single elongate nozzle. At least one tubular element is mounted on the second frame 6, the air issuing from the nozzles being directed to clean the inner surface of the hood 24. At least one other nozzle is mounted inside the hood 24 and the nozzles are directed to clean the second frame 6 as it rotates relative to the hood 24. This cleaning operation may be performed after the coating operation so as not to interfere with the coating process, but whilst the vacuum system is operational, so that dust generated is contained and recovered in the same way as described above.

It can be seen from the above, therefore, that the present invention, by provision of a hood which captures therewithin the coating applicator and ensures that errant coating material released during the application process is captured in an entrained air flow directed to a filter mechanism, enables a cleaner environment within which coating operators may work. Thus provision of a hood 24 ensures both containment and extraction of coating material-laden air. This means that the size of the applicator may be reduced as compared to the prior art because hoses are no longer necessary within the coating machine itself.

## Claims

1. A pipeline field joint coating applicator machine comprising:
a first frame (2) arranged to be mounted on a pipeline and which first frame carries an induction heating coil (4) encircling the pipeline for heating field joints of the pipeline on which the first frame is mounted; and
a second frame (6) arranged to be mounted on the pipeline and rotatable thereabout, which second frame carries a pipeline field joint coating applicator (8) and which second frame is arranged axially adjacent the first frame,
**characterised in that** the machine comprises a dust extraction hood (24) mounted on the second frame and arranged to surround the coating applicator, which dust extraction hood has two lateral sides (26,28), in which lateral sides respective holes (30,32) are formed through which holes the pipeline may pass;
the dust extraction hood being coupled to a vacuum source and a filter such that air may be drawn into the hood via one or both of the holes in the lateral sides of the hood under action of the vacuum source and air so drawn into the hood which is then contaminated with coating material from the applicator is filtered from the coating material via the filter.

2. A pipeline field joint coating applicator machine according to claim 1 wherein the holes (30,32) are of variable diameter thereby to control the rate of air ingress into the hood (24).

3. A pipeline field joint coating applicator machine according to claim 1 or claim 2 wherein the first (2) and second (6) frames are linked and move axially along the pipeline as a unit.

4. A pipeline field joint coating applicator machine according to any one of the preceding claims wherein the filter and the vacuum source are mounted externally of the hood (24) and are both coupled thereto via connection hoses (38,50).

5. A pipeline field joint coating applicator machine according to claim 4 wherein the hoses pass through one or both of the holes in the lateral sides of the hood.

6. A pipeline field joint coating applicator machine according to any one of the preceding claims wherein the hood (24) includes at least one removable viewing screen (40,42) for allowing an operator of the machine to view the coating process.

7. A pipeline field joint coating applicator machine according to claim 6 wherein the viewing screen is a hinged flap (40,42) of the hood (24).

8. A pipeline field joint coating applicator machine according to any one of the preceding claims wherein the hood (24) includes a hopper (34) for funnelling coating material-laden air from the hood to the filter.

9. A pipeline field joint coating applicator machine according to any one of the preceding claims wherein one or both of the vacuum source and the filter may be mounted within the hood (24).

10. A pipeline field joint coating applicator machine according to any one of the preceding claims further including at least one flexible delivery hose (56), through which flexible delivery hose coating material is delivered to the coating applicator (8) via at least one of the respective holes (30,32) in the hood (24).

11. A pipeline field joint coating applicator machine according to claim 6 wherein the coating applicator (8) is moveable towards and away from the pipeline to allow cleaning of the applicator.

12. A pipeline field joint coating applicator machine according to claim 11 wherein the coating applicator (8) is hingedly mounted to the second frame (6) in order to permit movement towards and away from the pipeline.

13. A pipeline field joint coating applicator machine according to any one of the preceding claims wherein both the first frame (2) and the second frame (6) are formed from at least two sectioned, hingedly coupled together, thereby to permit the machine to be placed around and removed from a continuous pipeline.

14. A pipeline field joint coating applicator machine according to any one of the preceding claims further including at least one high-pressure hose (58) for supplying compressed air into the hood (24) in order to blow coating material which may have coated the inside of the hood.

15. A pipeline field joint coating applicator machine according to claim 14 further including a nozzle, coupled to the at least one high-pressure hose, which nozzle is mounted on the coating applicator such that on rotation the second frame, both the second frame and interior of the hood may be cleaned by blowing of the compressed air.

## Patentansprüche

1. Maschine zum Auftragen einer Beschichtung auf eine Rohrleitungsmontageverbindung, umfassend:
einen ersten Rahmen (2), der angeordnet ist, um auf einer Rohrleitung angebracht zu werden, und wobei der erste Rahmen eine Induktionsheizspule (4) trägt, die die Rohrleitung zum Beheizen der Montageverbindungen der Rohrleitung, auf der der erste Rahmen angebracht ist, umschließt, und
einen zweiten Rahmen (6), der angeordnet ist, um auf der Rohrleitung angebracht zu werden und um diese drehbar zu sein, wobei der zweite Rahmen eine Vorrichtung (8) zum Auftragen einer Beschichtung auf eine Rohrleitungsmontageverbindung trägt und wobei der zweite Rahmen axial benachbart zu dem ersten Rahmen angeordnet ist,
**dadurch gekennzeichnet, dass** die Maschine eine Staubabsaughaube (24) umfasst, die an dem zweiten Rahmen angebracht und so angeordnet ist, die Beschichtungsauftragevorrichtung zu umgeben, wobei die Staubabsaughaube zwei laterale Seiten (26, 28) aufweist, wobei jeweilige Löcher (30, 32) in den lateralen Seiten ausgebildet sind, wobei die Rohrleitung durch diese Löcher verlaufen kann,
wobei die Staubabsaughaube derart mit einer Vakuumquelle und einem Filter gekoppelt ist, dass Luft durch Betrieb der Vakuumquelle über eines oder beide der Löcher in den lateralen Seiten der Haube in die Haube gesaugt werden kann und die derart in die Haube gesaugte Luft, die dann mit Beschichtungsmaterial von der Auftragevorrichtung kontaminiert ist, über den Filter von dem Beschichtungsmaterial gefiltert wird.

2. Maschine zum Auftragen einer Beschichtung auf eine Rohrleitungsmontageverbindung nach Anspruch 1, wobei die Löcher (30, 32) von variablem Durchmesser sind, um dadurch die Rate des Lufteintritts in die Haube (24) zu steuern.

3. Maschine zum Auftragen einer Beschichtung auf eine Rohrleitungsmontageverbindung nach Anspruch 1 oder Anspruch 2, wobei der erste (2) und der zweite (6) Rahmen verbunden sind und sich als Einheit axial entlang der Rohrleitung bewegen.

4. Maschine zum Auftragen einer Beschichtung auf eine Rohrleitungsmontageverbindung nach einem der vorstehenden Ansprüche, wobei der Filter und die Vakuumquelle außerhalb der Haube (24) angebracht sind und beide über Verbindungsschläuche (38, 50) gekoppelt sind.

5. Maschine zum Auftragen einer Beschichtung auf eine Rohrleitungsmontageverbindung nach Anspruch 4, wobei die Schläuche durch eines oder beide der Löcher in den lateralen Seiten der Haube verlaufen.

6. Maschine zum Auftragen einer Beschichtung auf eine Rohrleitungsmontageverbindung nach einem der vorstehenden Ansprüche, wobei die Haube (24) mindestens einen abnehmbaren Anzeigebildschirm (40, 42) einschließt, um dem Betreiber der Maschine zu ermöglichen, den Beschichtungsprozess anzusehen.

7. Maschine zum Auftragen einer Beschichtung auf eine Rohrleitungsmontageverbindung nach Anspruch 6, wobei der Anzeigebildschirm eine schwenkbare Klappe (40, 42) der Haube (24) ist.

8. Maschine zum Auftragen einer Beschichtung auf eine Rohrleitungsmontageverbindung nach einem der vorstehenden Ansprüche, wobei die Haube (24) einen Trichter (34) zum Leiten von mit Beschichtungsmaterial beladener Luft aus der Haube zu dem Filter einschließt.

9. Maschine zum Auftragen einer Beschichtung auf eine Rohrleitungsmontageverbindung nach einem der vorstehenden Ansprüche, wobei die Vakuumquelle und/oder der Filter innerhalb der Haube (24) angebracht sein können/kann.

10. Maschine zum Auftragen einer Beschichtung auf eine Rohrleitungsmontageverbindung nach einem der vorstehenden Ansprüche, weiterhin mindestens einen flexiblen Zufuhrschlauch (56) einschließend, wobei Beschichtungsmaterial durch den flexiblen Zufuhrschlauch zu der Beschichtungsauftragevorrichtung (8) über mindestens eines der jeweiligen Löcher (30, 32) in der Haube (24) geführt wird.

11. Maschine zum Auftragen einer Beschichtung auf eine Rohrleitungsmontageverbindung nach Anspruch 6, wobei die Beschichtungsauftragevorrichtung (8) zu und von der Rohrleitung bewegbar ist, um das Reinigen der Auftragevorrichtung zu ermöglichen.

12. Maschine zum Auftragen einer Beschichtung auf eine Rohrleitungsmontageverbindung nach Anspruch 11, wobei die Beschichtungsauftragevorrichtung (8) klappbar an dem zweiten Rahmen (6) angebracht ist, um eine Bewegung zu und von der Rohrleitung zu gestatten.

13. Maschine zum Auftragen einer Beschichtung auf eine Rohrleitungsmontageverbindung nach einem der vorstehenden Ansprüche, wobei sowohl der erste Rahmen (2) als auch der zweite Rahmen (6) aus mindestens zwei klappbar miteinander gekoppelten Abschnitten geformt ist, um dadurch der Maschine zu gestatten, um eine durchgehende Rohrleitung platziert und davon entfernt zu werden.

14. Maschine zum Auftragen einer Beschichtung auf eine Rohrleitungsmontageverbindung nach einem der vorstehenden Ansprüche, weiterhin mindestens einen Hochdruckschlauch (58) zum Zuführen von Druckluft in die Haube (24) einschließend, um Beschichtungsmaterial auszublasen, das die Innenseite der Haube beschichtet haben könnte.

15. Maschine zum Auftragen einer Beschichtung auf eine Rohrleitungsmontageverbindung nach Anspruch 14, weiterhin eine Düse einschließend, die mit dem mindestens einen Hochdruckschlauch gekoppelt ist, wobei die Düse so an der Beschichtungsauftragevorrichtung angebracht ist, dass durch Drehung des zweiten Rahmens sowohl der zweite Rahmen als auch das Innere der Haube durch Ausblasen der Druckluft gereinigt werden kann.

## Revendications

1. Machine d'applicateur de revêtement de joints de montage de canalisations comprenant :
un premier châssis (2) agencé pour être monté sur une canalisation, lequel premier châssis porte une bobine de chauffage par induction (4) enserrant la canalisation pour chauffer des joints de montage de la canalisation sur laquelle le premier châssis est monté ; et
un second châssis (6) agencé pour être monté sur la canalisation et pouvoir tourner autour de celle-ci, lequel second châssis porte un applicateur de revêtement de joints de montage de canalisations (8) et lequel second châssis est agencé axialement de manière adjacente au premier châssis,
**caractérisé en ce que** la machine comprend une hotte d'extraction de poussière (24) montée sur le second châssis et agencée pour entourer l'applicateur de revêtement, laquelle hotte d'extraction de poussière a deux côtés latéraux (26, 28), dans lesquels côtés latéraux des trous respectifs (30, 32) sont formés à travers lesquels trous la canalisation peut passer ;
la hotte d'extraction de poussière étant couplée à une source de vide et à un filtre de sorte que de l'air puisse être aspiré dans la hotte via un trou et/ou l'autre dans les côtés latéraux de la hotte sous l'action de la source de vide et l'air ainsi aspiré dans la hotte, qui est ensuite contaminé par le matériau de revêtement venant de l'applicateur, est filtré du matériau de revêtement via le filtre.

2. Machine d'applicateur de revêtement de joints de montage de canalisations selon la revendication 1, dans lequel les trous (30, 32) sont de diamètre variable en sorte de régler le débit d'entrée d'air dans la hotte (24).

3. Machine d'applicateur de revêtement de joints de montage de canalisations selon la revendication 1 ou la revendication 2, dans lequel le premier (2) et le second (6) châssis sont reliés et se déplacent axialement le long de la canalisation sous une forme unitaire.

4. Machine d'applicateur de revêtement de joints de montage de canalisations selon l'une quelconque des revendications précédentes, dans lequel le filtre et la source de vide sont montés extérieurement à la hotte (24) et sont tous deux couplés à celle-ci via des tuyaux de liaison souples (38, 50).

5. Machine d'applicateur de revêtement de joints de montage de canalisations selon la revendication 4, dans lequel les tuyaux souples passent à travers l'un et/ou l'autre des trous dans les côtés latéraux de la hotte.

6. Machine d'applicateur de revêtement de joints de montage de canalisations selon l'une quelconque des revendications précédentes, dans lequel la hotte (24) comprend au moins un écran d'observation amovible (40, 42) pour permettre à un opérateur de la machine d'observer le processus de revêtement.

7. Machine d'applicateur de revêtement de joints de montage de canalisations selon la revendication 6, dans lequel l'écran d'observation est un volet articulé (40, 42) de la hotte (24).

8. Machine d'applicateur de revêtement de joints de montage de canalisations selon l'une quelconque des revendications précédentes, dans lequel la hotte (24) comprend une trémie (34) pour faire passer l'air chargé de matériau de revêtement de la hotte au filtre.

9. Machine d'applicateur de revêtement de joints de montage de canalisations selon l'une quelconque des revendications précédentes, dans lequel l'une et/ou l'autre de la source de vide et du filtre peut ou peuvent être montés dans la hotte (24).

10. Machine d'applicateur de revêtement de joints de montage de canalisations selon l'une quelconque des revendications précédentes, comprenant en outre au moins un tuyau souple de fourniture (56) à travers lequel tuyau souple de fourniture un matériau de revêtement est fourni à l'applicateur de revêtement (8) via au moins l'un des trous respectifs (30, 32) dans la hotte (24).

11. Machine d'applicateur de revêtement de joints de montage de canalisations selon la revendication 6, dans lequel l'applicateur de revêtement (8) peut être déplacé vers la canalisation et s'en écarter pour permettre le nettoyage de l'applicateur.

12. Machine d'applicateur de revêtement de joints de montage de canalisations selon la revendication 11, dans lequel l'applicateur de revêtement (8) est monté articulé sur le second châssis (6) afin de permettre le déplacement vers la canalisation et en sens inverse.

13. Machine d'applicateur de revêtement de joints de montage de canalisations selon l'une quelconque des revendications précédentes, dans lequel à la fois le premier châssis (2) et le second châssis (6) sont formés d'au moins deux sections articulées l'une à l'autre en sorte de permettre à la machine de se déplacer autour d'une canalisation continue et de s'en écarter.

14. Machine d'applicateur de revêtement de joints de montage de canalisations selon l'une quelconque des revendications précédentes, comprenant en outre au moins un tuyau souple haute pression (58) pour fournir de l'air comprimé dans la hotte (24) afin de souffler le matériau de revêtement qui peut s'être appliqué à l'intérieur de la hotte.

15. Machine d'applicateur de revêtement de joints de montage de canalisations selon la revendication 14, comprenant en outre une buse couplée au au moins un tuyau souple haute pression, laquelle buse est montée sur l'applicateur de revêtement de sorte que, lors de la rotation du second châssis, à la fois le second châssis et l'intérieur de la hotte puissent être nettoyés en soufflant l'air comprimé.
